(19) Europäisches Patentamt
European Patent Office
Office européen des brevets

(11) **EP 4 514 006 A1**

(12) **EUROPEAN PATENT APPLICATION**
published in accordance with Art. 153(4) EPC

(43) Date of publication:
**26.02.2025 Bulletin 2025/09**

(21) Application number: **23792178.8**

(22) Date of filing: **19.04.2023**

(51) International Patent Classification (IPC):
**H04W 72/04** (2023.01)    **H04W 72/20** (2023.01)
**H04W 72/53** (2023.01)    **H04W 4/40** (2018.01)
**H04W 92/18** (2009.01)

(52) Cooperative Patent Classification (CPC):
**H04W 4/40; H04W 72/04; H04W 72/20;
H04W 72/53; H04W 92/18**

(86) International application number:
**PCT/KR2023/005310**

(87) International publication number:
**WO 2023/204604 (26.10.2023 Gazette 2023/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.04.2022  KR 20220049388**

(71) Applicant: **Innovative Technology Lab Co., Ltd.**
**Seocho-gu, Seoul 06744 (KR)**

(72) Inventor: **PARK, Dong Hyun**
**Seoul 06744 (KR)**

(74) Representative: **Diehl & Partner**
**Patent- und Rechtsanwaltskanzlei mbB**
**Erika-Mann-Straße 9**
**80636 München (DE)**

(54) **METHOD AND DEVICE FOR PERFORMING SIDELINK COMMUNICATION IN WIRELESS COMMUNICATION SYSTEM**

(57)    The method by which a terminal sets a sidelink resource pool in a wireless communication system comprises steps in which the terminal: receives, from a base station, resource pool configuration information on the basis of upper layer signaling; and performs sidelink communication with another terminal on the basis of the resource pool configuration information, wherein the resource pool configuration information can be information based on a sidelink resource pool configuration of an unlicensed band.

**FIG. 8**

**Description**

TECHNICAL FIELD

The present disclosure relates to a method and apparatus for performing sidelink communication in a wireless communication system.

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond."

To satisfy the requirements requested by "IMT for 2020 and beyond," various proposals have been made to support various numerologies about a time-frequency resource unit standard by considering various scenarios, service requirements, and potential system compatibility in a 3-rd Generation Partnership Project (3GPP) new radio (NR) system.

Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Also, Vehicle-to-everything (V2X) communication, a communication method of exchanging or sharing road infrastructures during driving and information, such as traffic conditions, through communication with other vehicles, may be considered. V2X may include, for example, vehicle-to-vehicle (V2V), which may refer to a long term evolution (LTE)-based/New Radio (NR) based communication between vehicles, vehicle-to-pedestrian (V2P), which may refer to LTE-based/NR-based communication between a vehicle and a user equipment (UE) carried by a user, and a vehicle-to-infrastructure/network (V2I/N), which may refer to a LTE-based/NR-based communication between a vehicle and a roadside unit (RSU)/network. The RSU may be a transportation infrastructure entity configured by a base station or a fixed UE, such as, an entity that transmits a speed notification to a vehicle.

DETAILED DESCRIPTION

TECHNICAL SUBJECT

A technical subject of the present disclosure relates to a method and apparatus for performing sidelink (SL) communication in a wireless communication system.

A technical subject of the present disclosure relates to a method and apparatus for configuring an SL resource pool in an unlicensed band.

A technical subject of the present disclosure relates to a method and apparatus for indicating an SL resource pool configured in an unlicensed band.

A technical subject of the present disclosure relates to a method and apparatus for configuring an SL resource pool in an unlicensed band in consideration of a region-specific regulation.

A technical subject of the present disclosure relates to a method and apparatus for satisfying a minimum occupied channel bandwidth regulation based on an interlace-based resource pool configuration.

Technical subjects achievable from the present disclosure are not limited to the aforementioned technical subjects and still other technical subjects not described herein may be clearly understood by one of ordinary skill in the art to which the disclosure pertains from the following description.

TECHNICAL SOLUTION

A method in which a user equipment (UE) allocates sidelink resources in a wireless communication system according to an aspect of the present disclosure may be provided.

According to an aspect of the present disclosure, a method of configuring a sidelink resource pool to a UE in a wireless communication system includes receiving, by the UE, resource pool configuration information from a base station based on higher layer signaling; and performing sidelink communication with another UE basespd on the resource pool configuration information, and, here, the resource pool configuration information may be information that is based on sidelink resource pool configuration of an unlicensed band.

Also, according to an aspect of the present disclosure, when the UE performs the sidelink communication in a single resource block set (RBS) based on a single sidelink bandwidth part (SL BWP) in a single carrier bandwidth, the UE may perform the sidelink communication based on first resource pool configuration information.

Also, according to an aspect of the present disclosure, the first resource pool configuration information may include at least one of information on an interlace-based sidelink resource pool configuration status and interlace-based subchannel index information associated with a resource pool.

Also, according to an aspect of the present disclosure, when the UE performs the sidelink communication in a plurality of RBSs based on a single SL BWP in a single carrier bandwidth, the UE may perform the sidelink communication based on second resource pool configuration information.

Also, according to an aspect of the present disclosure, the second resource pool configuration information may include at least one of information on an interlace-based sidelink resource pool configuration status and interlace-based subchannel index information associated with a resource pool.

Also, according to an aspect of the present disclosure, the second resource pool configuration information may further include at least one of RBS index list information associated with the resource pool and RBS number information.

EFFECT

According to the present disclosure, it is possible to provide a method of performing sidelink (SL) communication in a wireless communication system.

According to the present disclosure, it is possible to provide a method of configuring an SL resource pool in an unlicensed band.

According to the present disclosure, it is possible to provide a method of indicating an SL resource pool configured in an unlicensed band.

According to the present disclosure, it is possible to provide a method of configuring an SL resource pool in an unlicensed band in consideration of a region-specific regulation.

According to the present disclosure, it is possible to provide a method of satisfying a minimum occupied channel bandwidth regulation based on an interlace-based resource pool configuration.

Effects achievable from the present disclosure are not limited to the aforementioned effects and still other effects not described herein may be clearly understood by one of ordinary skill in the art to which the present disclosure pertains from the following description.

BRIEF DESCRIPTION OF DRAWINGS

FIG. 1    illustrates an example of describing a new radio (NR) frame structure to which the present disclosure may apply.

FIG. 2    illustrates an NR resource structure to which the present disclosure may apply.

FIG. 3    illustrates an NR sidelink slot structure to which the present disclosure may apply.

FIG. 4    illustrates an NR sidelink frequency to which the present disclosure may apply.

FIG. 5    illustrates an NR sidelink resource pool configuration to which the present disclosure may apply.

FIG. 6    illustrates an unlicensed band for each region for NR sidelink communication to which the present disclosure may apply.

FIG. 7    illustrates use of a 5 gigahertz (GHz) unlicensed band to which the present disclosure may apply.

FIG. 8    illustrates a method of increasing a bandwidth in consideration of a power spectral density (PSD) limitation to which the present disclosure may apply.

FIG. 9    illustrates a method of configuring a guard band in consideration of a shared band within an intra-cell to which the present disclosure may apply.

FIG. 10   illustrates a single resource block set (RBS) operation to which the present disclosure may apply.

FIG. 11   illustrates a method of indicating an interlace structure for a resource pool in a single RBS to which the present disclosure may apply.

FIG. 12   illustrates a method of configuring a resource pool in a plurality of RBSs to which the present disclosure may apply.

FIG. 13   illustrates a method of indicating an interlace-based resource pool configuration on a plurality of RBSs for wideband operation to which the present disclosure may apply.

FIG. 14   illustrates a method of indicating an interlace-based resource pool configuration on a plurality of RBSs for wideband operation to which the present disclosure may apply.

FIG. 15   illustrates a method of indicating an interlace-based resource pool configuration on a plurality of RBSs for wideband operation to which the present disclosure may apply.

FIG. 16   illustrates a sidelink resource pool configuration method for an unlicensed band to which the present disclosure may apply.

FIG. 17     is a diagram illustrating a base station device and a terminal device to which to which the present disclosure may apply.

## BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term 'base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

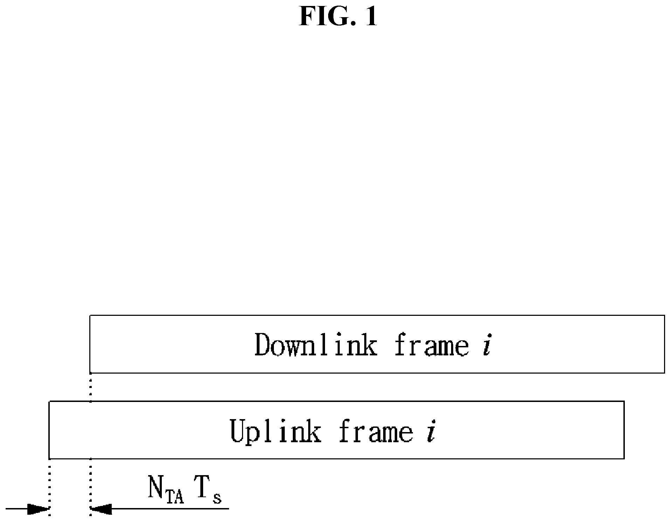

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $x = T_s/T_c = 64$ may be a constant in a multiple relationship between an NR time unit and an LTE time unit. In LTE, $T_s = 1/(\Delta f_{ref} \cdot N_{f,ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as $k = T_s/T_c = 64$.

Referring to FIG. 1, a time structure of a frame for a downlink/uplink (DL/UL) transmission may include $T_f = (\Delta f_{max} N_f/100) \cdot T_s = 10ms$. Here, a single frame may include 10 subframes corresponding to $T_{sf} = (\Delta f_{max} N_f/1000) \cdot T_s = 1ms$. A number of consecutive orthogonal frequency division multiplexing (OFDM) symbols per subframe may be

$$N_{symb}^{subframe,\mu} = N_{symb}^{slot} N_{slot}^{subframe,\mu}$$

. Also, each frame may be divided into two half frames and the half frames may include 0 to 4 subframes and 5 to 9 subframes. Here, the half frame 1 may include 0 to 4 subframes and the half frame 2 may include 5 to 9 subframes.

The $N_{TA}$ represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = \left(N_{TA} + N_{TA,offset}\right)T_c$$

The $N_{TA,offset}$ denotes a TA offset value occurring due to a duplex mode difference and the like. Basically, in a frequency division duplex (FDD), $N_{TA,offset}=0$. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6 GHz or less frequency, $N_{TA,offset}$ may be 39936Tc or 2600Tc. 39936Tc=20.327μs and 25600Tc=13.030μs. Also, in FR2 (Frequency Range 2) which is millimeter wave (mmWave), the $N_{TA,offset}$ may be 13792Tc. At this time, 39936Tc=7.020 μs.

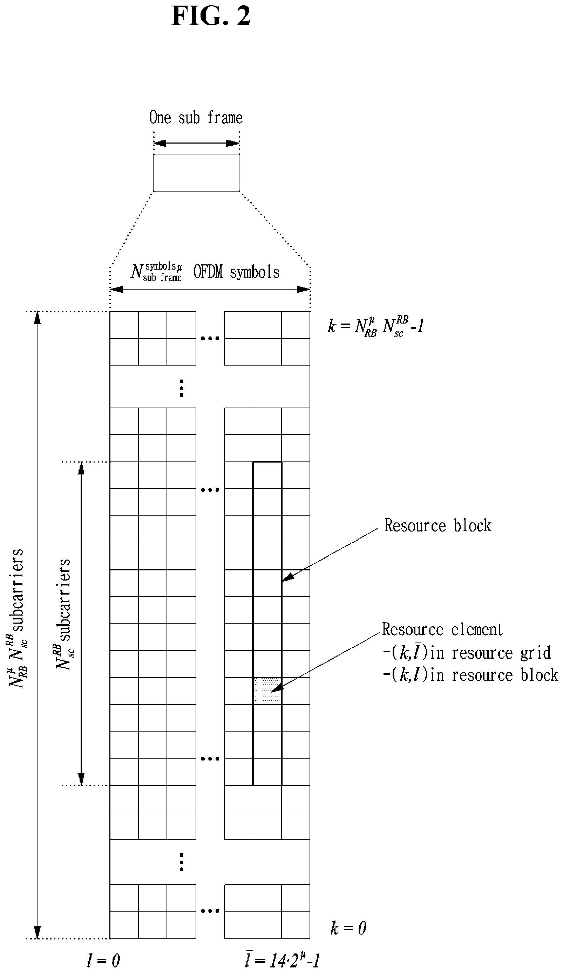

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB ($n_{PRB}$) may be configured. The index for RB may be utilized within a specific frequency band or system bandwidth. The index for RB may be defined as shown in Equation 2 below. Here, the $N^{RB}_{sc}$ represents the number of subcarriers per one RB and k represents the subcarrier index.

[Equation 2]

$$n_{PRB} = \left\lfloor \frac{k}{N_{sc}^{RB}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz

Table 1 below shows an example of the numerologies supported by the NR system.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |

(continued)

| $\mu$ | $\Delta f = 2^{\mu} \cdot 15[kHz]$ | Cyclic prefix |
|---|---|---|
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu = 2$ and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu = 1$ and 2 may be used in the unlicensed band of 6 GHz or less and an SCS corresponding to $\mu = 3$ and 4 may be used in the unlicensed band above 6 GHz. Here, for example, if $\mu = 4$, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot $\left(N_{symb}^{slot}\right)$, a number of slots per frame $\left(N_{slot}^{frame,\mu}\right)$, and a number of slots per subframe $\left(N_{slot}^{subframe,\mu}\right)$ for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu$ = 2 and SCS = 60 kHz), shows the number of slots per frame and the number of slots per subframe based on the normal slot for which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480kHz may not be considered in Table 4, the present disclosure is not limited to such examples.

[Table 4]

| SCS | slots in 10ms | slots in 10ms | symbols in 10 ms |
|---|---|---|---|
| 15kHz | 10 | 20 | 140 |
| 30kHz | 20 | 40 | 280 |
| 60kHz | 40 | 80 | 560 |
| 120kHz | 80 | N/A | 1120 |
| 240kHz | 160 | N/A | 2240 |
| 480kHz | 320 | N/A | 4480 |

The V2X service may support a set of basic requirements for V2X services. The requirements are designed basically in sufficient consideration of a road safety service. Here, V2X UE may exchange autonomous status information through a SL. Also, the V2X UE may exchange the information with infrastructure nodes and/or pedestrians.

The V2X service (e.g., LTE Rel-15) may support at least one of a carrier aggregation in a SL, a high order modulation, a latency reduction, a transmit (Tx) diversity, and a sTTI (Transmission Time Interval). For this purpose, new features may be applied to the V2X communication. More particularly, the V2X UE may operate in consideration of coexistence with other V2X UEs. For example, the V2X UE may use the same resource pool as other V2X UEs.

For example, the technical features may be classified largely based on four categories as represented by the following Table 5 by considering the use cases for supporting a V2X service as the system aspect (SA) 1, but are not limited thereto. In Table 5, the "Vehicles Platooning" may be the technology that enables a plurality of vehicles to dynamically form a group and similarly operate. The "Extended Sensors" may be the technology that enables an exchange of data gathered from sensors or video images. The "Advanced Driving" may be the technology that enables a vehicle to drive based on semi-automation or full-automation. The "Remote Driving" may be the technology for remotely controlling a vehicle and the technology for providing an application. Based thereon, further description related thereto may be given by the following Table 5.

[Table 5]

| Vehicles Platooning |
|---|
| Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |

| Extended Sensor |
|---|
| Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |

(continued)

| Advanced Driving |
|---|
| Advanced Driving enables semi-automated or full-automated driving. Each vehicle and/or RSU shares its own perception data obtained from its local sensors with vehicles in proximity and that allows vehicles to synchronize and coordinate their trajectories or maneuvers. Each vehicle shares its driving intention with vehicles in proximity too. |

| Remote Driving |
|---|
| Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements. |

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR SL based on the NR V2X system. However, the same or similar composition may be expanded and applied to the LTE V2X system, and is included but not limited to the following examples. That is, in the LTE V2X system, the present disclosure may apply to an interactable portion.

Here, NR V2X capability may not be limited to essentially supporting only V2X services and V2X RAT to be used may be selected.

Also, new service requirements for Public Safety and commercial use case for NR V2X services may be considered further in. For example, the use case may include, but is not limited to, at least one of more advanced V2X services, public safety services, the Network Controlled Interactive Service (NCIS), the Gap Analysis for Railways (MONASTERYEND), the Enhanced Relays for Energy Efficiency and Extensive Coverage (REFEC), and the Audio-Visual Service Production (AVPROD) certification.

A physical channel, a signal, a basic slot structure, and a physical resource may be configured for the NR V2X. Here, an NR Physical SL Shared Channel (NR PSSCH) may be a physical layer NR SL data channel. The V2X UEs may exchange data and control information (e.g., 2nd SCI, CSI) through the NR PSSCH. An NR Physical SL Control Channel (NR PSCCH) may be a physical layer NR SL control channel. The NR PSCCH refers to a channel for transmitting scheduling information of the NR SL data channel and control information (1st SL Control Information (SCI)) including 2nd SCI indication. That is, a V2X UE may transmit control information for SL data communication to another V2X UE through PSCCH. An NR Physical SL Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X UE and then may receive the HARQ feedback information of the corresponding data through NR PSFCH. An NR SL Synchronization Signal/Physical SL Broadcast Channel (SLSS/PSBCH) block refers to a channel block in which an NR SL synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary SL Synchronization Signal (PSSS) and a Secondary SL Synchronization Signal (SSSS). The synchronization signal is generated based on at least one SLSSID value. The NR Physical SL Broadcast Channel (PSBCH) refers to a channel for transmitting system information required to perform V2X SL communication. The NR PSBCH is transmitted with the SLSS and periodically transmitted based on a set of SLSS/PSBCH block indexes to support beam-based transmission.

Also, a PSCCH and PSSCH may be defined for supporting NR V2X. A UE may transmit SCI to another UE via PSCCH. Here, the Tx UE may transmit the first SCI (1st SCI, SCI format 1-A) to the Rx UE via PSCCH. The 1st SCI may be used for scheduling the PSSCH and the secondary SCI (2nd SCI) within the PSSCH, and the 1st SCI may contain priority information, time/frequency resource allocation information, resource reservation information, Demodulation Reference Signal (DMRS) pattern information, 2nd SCI format indicator information, 2nd beta-offset indicator information as a parameter for the SCI and PSSCH rate matching operation, DMRS port count information, Modulation Coding Scheme (MCS) information, additional MCS table indicator information (e.g., indicating one of the 64 QAM, or 256 OAM or URLLC MCS table), PSFCH overhead indicator information (a parameter for PSSCH rate matching operation with 2nd SCI), and at least one of the reserved bits.

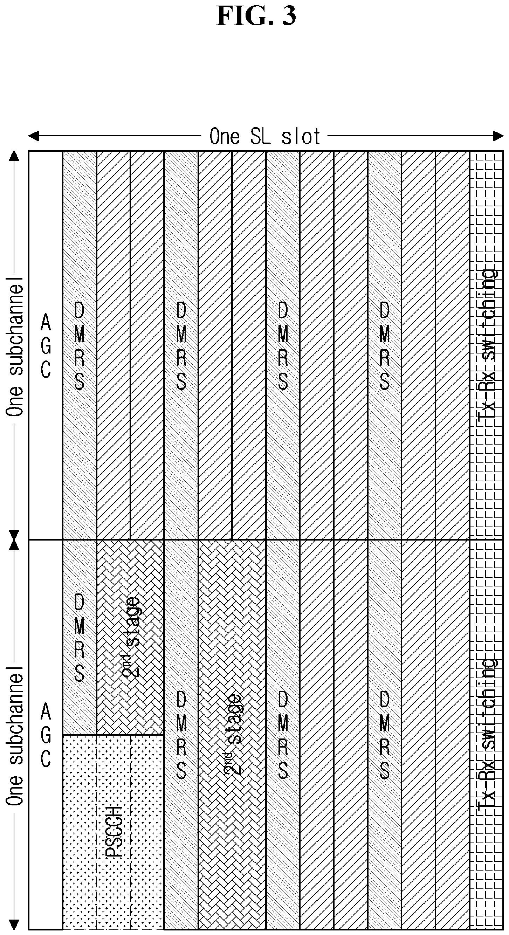

FIG. 3 illustrates an NR SL slot structure to which the present disclosure may apply.

Referring to FIG. 3, a single SL slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to the remaining OFDM symbols excluding the AGC symbol and the Tx-Rx switching symbol. In detail, locations of the PSCCH (1st SCI), the 2nd SCI, PSSCH (Data), and the DMRS for demodulation may be the same as in FIG. 3, but are not limited thereto. For example, in FIG. 3, the PSCCH and the 2nd SCI are present in the first subchannel and the PSSCH and the DMRS may be allocated considering this. As another example, the second subchannel refers to a subchannel in which the PSCCH and the 2nd SCI are absent and the PSSCH and the DMRS may be allocated as in FIG. 3.

Here, the number of PSSCH DMRSs may be configured according to a higher layer configuration and one or more PSSCH DMRSs may be configured according to a channel environment of the UE. A PSCCH (1st SCI) receives a demodulation using a DMRS of PSCCH (i.e., PSCCH DMRS) and is equally allocated and transmitted to every four resource elements (REs) within a single resource block (RB). On the contrary, the 2nd SCI is decoded using the PSSCH DMRS.

Also, for example, a single resource pool associated with an NR SL may support the frequency division multiplexing (FDM), the time division multiplexing (TDM), and the spatial divisional multiplexing (SDM). This means that each resource in a single resource pool can be divided and used based on the frequency, the time, and the space, which can increase the resource efficiency.

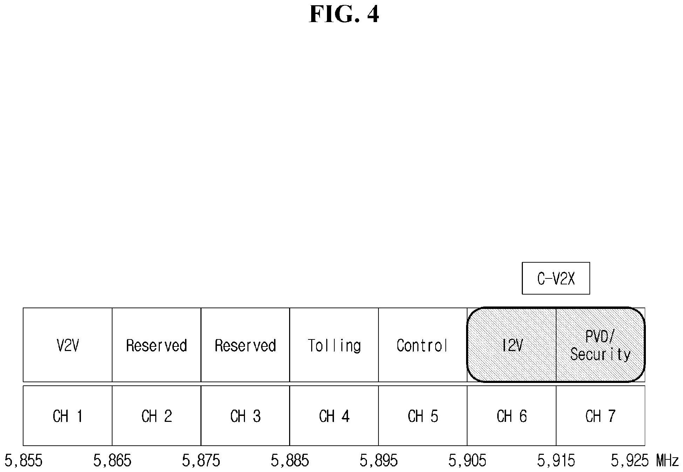

FIG. 4 illustrates an NR SL frequency to which the present disclosure may apply. For example, the NR SL may operate based on at least one of Frequency Range 1 (FR1) (sub 6 GHz) and Frequency Range 2 (FR2) (i.e., up to 52.6 GHz), the unlicensed ITS bands, and the licensed band. In detail, for example, referring to FIG. 4, 5,855 to 5,925 MHz may be allocated for an ITS service (technology neutral manner).

Also, the NR V2X quality of service (QoS) requirements may be considered. That is, the delay, the reliability, and a data rate may need to be satisfied with predetermined conditions related to the requirements for an NR V2X service. Here, the requirements may be configured as in Table 6 below and Table 7 may show the PC5 QoS for NR V2X.

Here, to satisfy the QoS requirements, the access stratum (AS) level QoS management may be required. To this end, a HARQ and CSI feedback associated with a link adaptation may be required. Also, each of the NR V2X UEs may have a different maximum bandwidth capability (max. BW capability). Considering this, AS level information that includes at least one of UE capability, QoS related information, a radio bearer configuration, and a physical layer configuration may be exchanged between the NR V2X UEs.

[Table 6]

| |
|---|
| - Delay:[3, 100ms] |
| - Reliability : [90%, 99.999%] |
| - Data rate: up to 1Gbps (TS22.186) |

[Table 7]

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 1 | GBR (NOTE 1) | 3 | 20ms | $10^{-4}$ | N/A | 2000 ms | Platooning between UEs-Higher degree of automation; Platooning between UE and RSU-Higher degree of automation |
| 2 | | 4 | 50 ms | $10^{-2}$ | N/A | 2000 ms | Sensor sharing-higher degree of automation |
| 3 | | 3 | 100 ms | $10^{-4}$ | N/A | 2000 ms | Information sharing for automated driving-between UEs or UE and RSU-higher degree of automation |
| 55 | Non-GBR | 3 | 10 ms | $10^{-4}$ | N/A | N/A | Cooperative lane change-higher degree of automation |
| 56 | | 6 | 20 ms | $10^{-1}$ | N/A | N/A | Platooning informative exchange-low degree of automation; Platooning-information sharing with RSU |
| 57 | | 5 | 25 ms | $10^{-1}$ | N/A | N/A | Cooperative lane change-lower degree of automation |
| 58 | | 4 | 100 ms | $10^{-2}$ | N/A | N/A | Sensor information sharing-lower degree to an RSU |
| 59 | | 6 | 500 ms | $10^{-1}$ | N/A | N/A | Platooning-reporting to an RSU |

(continued)

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 82 | Delay Critical GBR (NOTE 1) | 3 | 10 ms | $10^{-4}$ | 2000 bytes | 2000 ms | Cooperative collision avoidance; Sensor sharing-Higher degree of automation; Video sharing-higher degree of automation |
| 83 | | 2 | 3 ms | $10^{-5}$ | 2000 bytes | 2000 ms | Emergency trajectory alignment; Sensor sharing-Higher degree of automation |
| •NOTE 1: GBR and Delay Critical GBR PQIs can only be used for unicast PC5 communications. | | | | | | | |
| Editor's note: It is FFS if GBR and Delay Critical GBR can also be used for broadcast and groupcast. | | | | | | | |
| • NOTE 1: For standardized PQI to QoS characteristics mapping, the table will be extended/updated to support service requirements for other identified V2X services. • NOTE 2: The PQIs may be used for other services than V2X. | | | | | | | |

Hereinafter, a SL HARQ procedure is described. Whether the V2X UE is to report a HARQ feedback is indicated by a higher layer (e.g., RRC) configuration and SCI signaling (e.g., 2nd SCI). For example, if the V2X UE performs SL communication based on a groupcast, whether to report the HARQ feedback may be determined based on a distance between a Tx UE and a Rx UE.

When the V2X UE performs at least one of unicast and groupcast transmission, the SL HARQ feedback may be enabled or disabled. Here, enabling/disabling the HARQ feedback may be determined based on at least one of a channel condition (e.g., RSRP), a distance between Tx UE and Rx UE, and QoS requirements.

In the case of groupcast, whether to transmit a HARQ feedback may be determined based on a physical distance between the Tx UE and the Rx UE. Here, when the HARQ feedback is performed for the groupcast transmission via a PSSCH, the Rx UE may send a negative response only when the received PSSCH decoding fails. It may be called an option 1 operation. Moreover, when the HARQ feedback is performed for the groupcast transmission via a PSSCH, the Rx UE may send a positive response or a negative response based on whether a PSSCH decoding succeeds and it may be called an option 2 operation. In the option 1 operation of feeding back only a negative response as a NACK only HARQ feedback, if the physical distance between the Tx UE and the Rx UE is less than or equal to the communication range requirements, a HARQ feedback corresponding to the PSSCH reception may be performed. On the contrary, if the physical distance between the Tx UE and the Rx UE is greater than the communication range requirements, the V2X UE may not perform the HARQ feedback corresponding to the PSSCH reception.

Here, a location of the Tx UE is indicated to the Rx UE through SCI signaling associated with the PSSCH. The Rx UE may estimate a distance from the Tx UE based on both pieces of information included in the received SCI and its location information and may operate as above.

Also, when a unicast communication is performed based on the V2X, a case in which an SL HARQ feedback is enabled may be considered. The Rx UE may generate and transmit a HARQ ACK/NACK corresponding to the PSSCH depending on whether the decoding of a corresponding transport block (TB) succeeds.

Then, an NR SL resource allocation mode refers to a mode in which a base station schedules a SL transmission resource. Here, a mode in which the base station schedules a SL transmission resource may be mode 1. For example, when the V2X UE is located within the base station coverage, the V2X UE may receive SL resource information from the base station. On the contrary, there is a mode in which the V2X UE directly determines a resource for SL transmission on either a SL resource configured by the base station/network or a pre-configured SL resource. Here, a mode in which the UE directly determines a SL transmission resource may be mode 2.

Also, numerology and waveform for sidelink may be considered, which may be as shown in Table 8 below. In detail, regarding PSSCH/PSCCH and PSFCH in a sidelink, SCS and CP lengths supported in each of FR1 and FR2 may be as shown in Table 8 below. Here, the waveform may support only OFDM without supporting DFT-S-OFDM, but may not be limited thereto. A sidelink-synchronization signal block (SL-SSB) may be defined independently for each frequency range, which may be similar to NR-Uu.

[Table 8]

| | FR 1 | FR2 |
|---|---|---|
| PSSCH/PSCCH and PSFCH | - Normal CP for 15kHz, 30kHz, 60kHz<br>- Extended CP for 60kHz | - Normal CP for 60kHz, 120kHz,<br>- Extended CP for 60kHz |
| note | No support of DFT-S-OFDM for NR SL in Rel-16 | |

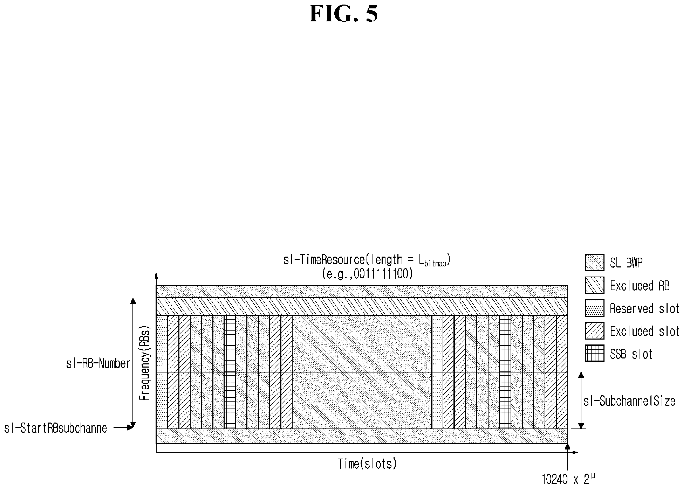

FIG. 5 illustrates an NR sidelink (SL) resource pool configuration. Referring to FIG. 5, a resource pool may represent resources in a time and a frequency used for sidelink transmission and reception. For example, at least one resource pool may be configured within a single SL BWP within a single carrier. Here, resources of the resource pool may be configured based on time resources of a slot set unit and frequency resources of a consecutive subchannel set unit. Also, the resource pool may be configured for each of transmission and reception.

In more detail, as time resources for resource pool configuration provided in an NR sidelink, at least one of a resource pool time period, a sidelink slot set (sl-TimeResource (length = $L_{bitmap}$)) within a single resource pool application period, and a first symbol and the number of consecutive symbols for a set of consecutive symbols within a single slot may be configured. As frequency resources, at least one of a bandwidth of at least one subchannel (e.g., sl-SubchannelSize = {10, 15, 20, 25, 50, 75 and 100} RBs), the entire bandwidth of the resource pool indicated by the number of consecutive subchannels (set of consecutive subchannels (e.g., sl-NumSubchannel = {1 to 27})), and a location in the frequency domain of a first subchannel of the resource pool (sl-StartRBsubchannel={0 to 265}) may be configured. For example, resources in the time domain and the frequency domain may be configured based on higher layer parameters. In FIG. 5, a frequency resource corresponding to an excluded resource block (RB) may represent some remaining RBs if total available RB resources do not exactly match a subchannel size (i.e., if it does not reach the number of RBs constituting a single subchannel). Here, the corresponding resources may not be used in the NR sidelink. Also, for example, a reserved slot may indicate a remaining slot in a situation in which a multiple unit of a length of a bitmap (e.g., sl-TimeResource) on a time resources is not established and may not be used as NR sidelink resources.

Next, a case in which an unlicensed band (unlicensed spectrum) is used for communication between a base station and a UE may be considered. For example, a communication scheme based on the unlicensed band may be a scheme of occupying a channel through competition and performing communication based on the occupied channel. The unlicensed band-based communication may be performed even for communication between the base station and the UE. In the following, described is an operation based on a case in which the unlicensed band is used for the sidelink communication. That is, the unlicensed band may be used even for sidelink communication that is communication between UEs. Also, the sidelink resource pool needs to be configured in consideration of using the sidelink unlicensed band. In more detail, the sidelink communication may be performed based on the resource pool. In the case of performing communication through the unlicensed band, the resource pool configuration needs to be differently configured.

For example, the resource pool of the sidelink communication may be configured based on a slot unit and a symbol that may be used for sidelink within a slot may be determined, which is the same as shown in FIG. 5. Also, as described above with FIG. 5, in the frequency domain, it may be configured based on the number of consecutive subchannels. The aforementioned sidelink resource pool configuration may be configured in consideration of unlicensed band communication, which is described below.

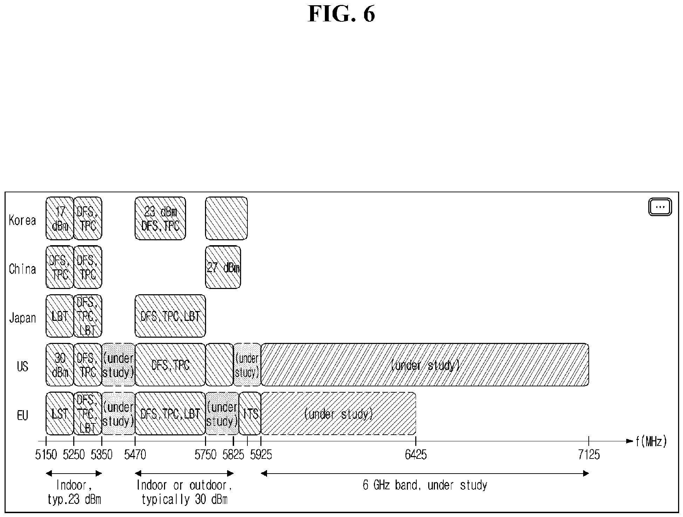

FIG. 6 illustrates an unlicensed band for each region for NR sidelink communication to which the present disclosure may apply. In Table 8 above, the frequency range of NR FR1 may be from 450 MHz to 6 GHz, but the corresponding frequency range may change from 450 MHz to 7.125 GHz. The frequency range of NR FR1 may be changed for the unlicensed band of 6 GHz band, but may not be limited thereto.

For example, the unlicensed band may be located below 1 GHz, 2.4 GHz, 5 GHz, 6 GHz, 37 GHz (USA only), and 60 GHz, but may not be limited thereto. Here, referring to FIG. 6, for example, in the system, 5 GHz band may be band 46 that is defined as 5150 to 5925 MHz. Also, for example, for LAA operation, band 49 (3550-3700 MHz) may be defined as a citizens broadband radio service (CBRS), but may not be limited thereto.

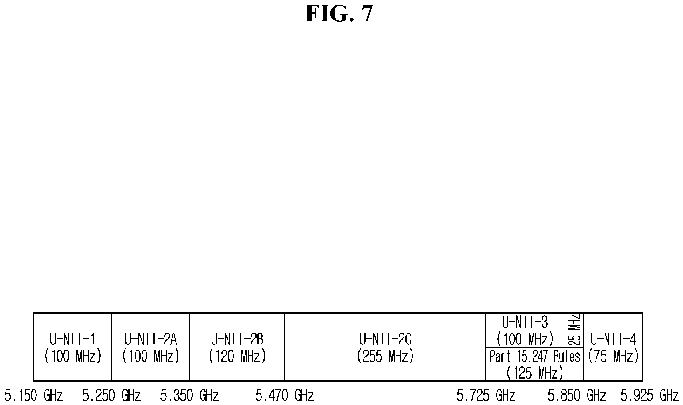

FIG. 7 illustrates use of a 5 GHz unlicensed band to which the present disclosure may apply. Referring to FIG. 7, each band within the 5 GHz unlicensed band may be set and, based thereon, use of the unlicensed band may be set. For example, it may be divided into 20 MHz units and each 20 MHz may be a single channel.

Here, the low frequency band of 5150 to 5350 MHz within the aforementioned band is specified in most regions to have the maximum transmit power of 23 dBm for indoor use. Also, in the band of 5470 MHz or more, it is used in a region with transmit power of up to 30 dBm and outdoor use in most areas. Here, for example, additional requirements may be present in some regions, given as effective isotropic radiated power (EIRP) values based on Table 9 below, along with limitation of the maximum transmit power.

[Table 9]

| Power spectral density, maximum channel occupancy time, minimum occupied bandwidth and dynamic frequency selection, transmit power control and LBT |
| --- |

Here, power spectral density (PSD) may indicate that the device is limited to performing full power transmission within a reference bandwidth. As a detailed example, European regulations may limit the PSD to 10 dBm/MHz. Therefore, in non-20MHz bandwidths, the device may not perform transmission at the maximum transmit power of 23 dBm.

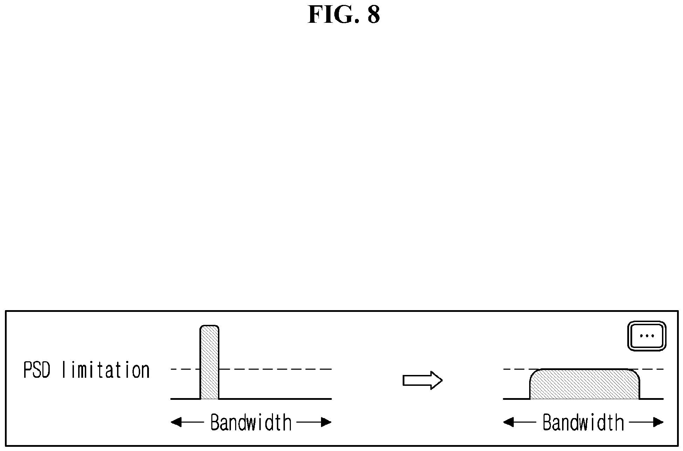

FIG. 8 illustrates a method of increasing a bandwidth in consideration of a PSD limitation to which the present disclosure may apply. For example, as in FIG. 8 a case of small data transmission that requires only a small bandwidth may be considered. Here, in the case of performing small data transmission through a wide bandwidth, coverage may be expanded. Also, minimum bandwidth occupancy regulation may be satisfied with transmission through the wide bandwidth. Considering this, a method of performing transmission in the wide bandwidth may be preferred for small data.

Also, for example, in the case of occupying a channel through a channel access procedure in the unlicensed band, a maximum channel occupancy time (COT) corresponding to an occupancy-allowable maximum time may be differently set for each region. For example, Japan allows the maximum COT of up to 4 ms, while Europe allows the maximum COT of up to 8 ms or 10 ms. However, it is only an example and is not limited to the aforementioned embodiment. Also, for example, Europe may support frame base equipment (FBE) and load base equipment (LBE) rules. Here, FBE may be set to High Performance Radio (LAN HiperLAN)/2, and LBE may be adopted and applied from Wi-Fi standard specification and both may be supported in NR as a new communication system.

Also, for example, the minimum occupied bandwidth may be a bandwidth regulation that needs to be minimally occupied when a channel access is successful once. For example, the minimum occupied bandwidth regulation may be configured to occupy a nominal channel BW of 80 to 90% or more. As a detailed example, when the UE transmits a PUSCH to the base station in an unlicensed band, resources for the PUSCH may be requested to be allocated in an interlaced form in a specific bandwidth, but may not be limited to the corresponding embodiment.

Also, a regulation for dynamic frequency selection may be a regulation that limits bandwidth use for the purpose of protecting a system (e.g., radio) having high priority for use of the unlicensed band. Also, a transmit power control regulation may be a regulation that limits transmit power much lower than an allowed maximum transmit power value to be used. Also, a listen before talk (LBT) regulation may be a regulation for a channel access procedure, and Europe may support FBE and LBE rules. Here, FBE may be Hiperlan/2, and LBE may be adopted and applied from Wi-Fi standard specification and both may be supported in NR.

Also, for example, the 5 GHz unlicensed band may be used based on the aforementioned description, but, use of the 6 GHz band is under discussion in every country and institution. Here, the 6 GHz band may be a band that is not used in a mobile system, which differs from the 5 GHz. That is, different from the 5 GHz band shared in a plurality of mobile communication systems, the 6 GHz band may be used for a single specified communication system. Therefore, problems or inefficiency arising due to coexistence of different systems may be reduced.

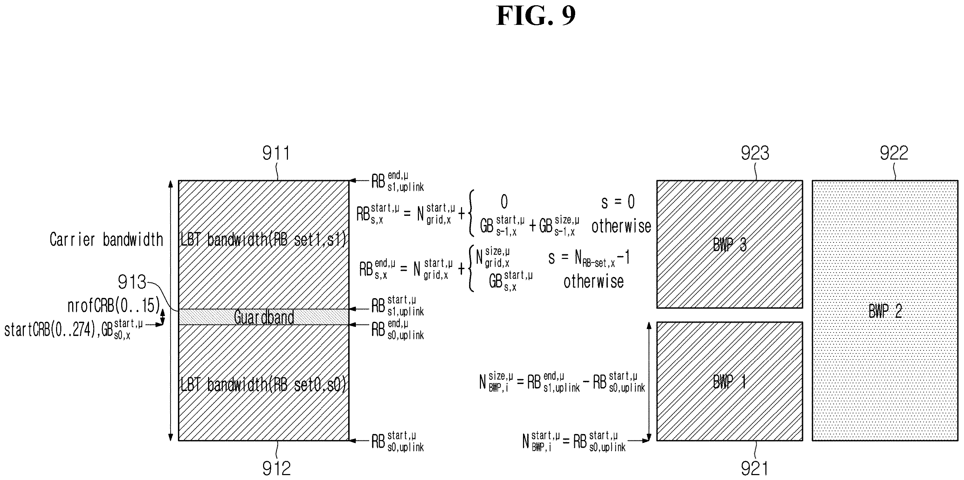

FIG. 9 illustrates a method of configuring a guard band in consideration of a shared band (e.g., unlicensed band) within an intra-cell to which the present disclosure may apply.

Referring to FIG. 9, to support a wideband operation in a shared spectrum access, a UE may receive IntraCellGuardBandsPerSCS parameter for each of an UL carrier and a DL carrier from a base station based on base station configuration. The UE may be provided with intra-cell guard bands of $N_{\text{RB-set},x}$ - 1 in a single carrier (subcarrier spacing index=$\mu$). Referring to FIG. 9, the UE may receive higher layer signaling for a start common resource block (CRB) and the number of CRBs for each guard band. For example, the CRB may be a resource block defined/configured based on a point A that is a start location of a transmission bandwidth in a carrier in the frequency domain. The UE may verify information on the point A through base station signaling and, based thereon, may recognize a CRB location in frequency.

Here, each guard band may be defined based on $GB_{s,x}^{\text{start},\mu}$ parameter as the start CRB and, in each guard band, the size of the number of CRBs may be defined based on $GB_{s,x}^{\text{size},\mu}$ parameter. The UE may receive the aforementioned information through higher layer signaling based on each of startCRB and nrofCRBs parameters. Here, $s \in \{0, 1, ..., N_{RB\text{-}set,x} - 2\}$, $N_{RB\text{-}set,x}$ denotes the number of RB sets, and x may be configured as DL or UL for downlink and uplink. $N_{RB\text{-}set,x}$ RB sets may be configured as a resource block set (RBS) within a single carrier through a guard band configuration. For example, the guard band may be configured based on IntraCellGuardBandsPerSCS parameter and the RBS may be configured within a single carrier accordingly.

Here, each RBS frequency bandwidth may correspond to an LBT frequency bandwidth. That is, each RBS may be set as a bandwidth corresponding to an LBT procedure performed through the base station and the UE. For example, in FIG. 9, if LBT succeeds in a correspondence area corresponding to the LBT bandwidth, an RB set 1 911 and an RB set 2 912 may occupy a corresponding band and may perform communication. That is, the RBS may correspond to the LBT bandwidth. For example, a Tx node (e.g., gNB or UE) may determine channel occupancy for the unlicensed band through an LBT channel access procedure performed on RBS resources corresponding to the LTE bandwidth. When the LBT procedure succeeds in a single RBS, the Tx node may perform transmission on a resource corresponding to the RBS.

Here, each RBS may be defined as a start CRB and an end CRB. The start CRB may be $RB^{start,\mu}_{s,x}$, and the end CRB may be $RB^{end,\mu}_{s,x}$. Here, a size of guard band 913 may be nrofCRBs. For example, a size of a guard band 913, nrofCRBs, may not be expected to be set to a size smaller than the number of applicable intra-cell guard bands defined in consideration of requirements regarding an interference status of a wireless bandwidth according to subcarrier spacing $\mu$ and carrier size $N^{size,\mu}_{grid,x}$.

Here, the start CRB and the end CRB for each RBS (911, 912) may be determined based on RBS index s, and RBS index s may be s $\in \{0, 1, ..., N_{RB\text{-}set,x} - 1\}$. That is, RBS index s may be a resource block with a size of $RB^{size,\mu}_{s,x}$, and $RB^{size,\mu}_{s,x}$ denotes the number of CRBs determined through the start CRB and the end CRB based on Equation 3 below. Also, in each RBS, the start CRB and the end CRB may be as shown in Equation 4 and Equation 5 below.

[Equation 3]

$$RB^{size,\mu}_{s,x} = RB^{end,\mu}_{s,x} - RB^{start,\mu}_{s,x} + 1$$

[Equation 4]

$$RB^{start,\mu}_{s,x} = N^{start,\mu}_{grid,x} + \begin{cases} 0 & s = 0 \\ GB^{start,\mu}_{s-1,x} + GB^{size,\mu}_{s-1,x} & \text{otherwise} \end{cases}$$

[Equation 5]

$$RB^{end,\mu}_{s,x} = N^{start,\mu}_{grid,x} + \begin{cases} N^{size,\mu}_{grid,x} - 1 & s = N_{RB\text{-}set,x} - 1 \\ GB^{start,\mu}_{s,x} - 1 & \text{otherwise} \end{cases}$$

For example, if the UE is not provided with IntraCellGuardBandsPerSCS parameter configuration, CRB indexes for a nominal intra-cell guard band and an RBS pattern based on carrier $\mu$ and carrier size $N^{size,\mu}_{grid,x}$ may be determined according to requirements of RF standard. Also, for example, if the aforementioned nominal intra-cell guard band and RBS pattern do not include an intra-cell guard band, an RBS of the corresponding carrier may be assumed to be 1.

For example, in FIG. 9, two LBT BWs (RBS 0, RBS1) may be configured in a single BWP 922 within a single carrier bandwidth. Here, a single guard band 913 may be configured between the two RBSs 911 and 912. A location of each of the two RBSs 911 and 912 may be determined as shown in FIG. 9, based on the aforementioned higher layer parameter. Also, for example, when a plurality of BWPs 921 and 923 are configured within a single carrier bandwidth, an RBS associated with each BWP may be verified. Here, RBSs corresponding to a first RBS (=s0, 912) and a last RBS(=s1, 911) of each BWP among the RBSs 911 and 912 within the carrier may be indexed through s0 and s1 indexes.

In the following, a sidelink communication method considering advanced V2X service support based on sidelink of a new communication system (e.g., NR Sidelink) and other services (e.g., public safety, wearable device) are described. For example, for commercial sidelink application, there is a need to consider requirements for increasing a sidelink data rate and supporting a new carrier frequency. In the following, a sidelink communication method considering the same is described. As a detailed example, an increase in the sidelink data rate may be required for sharing video information between autonomous vehicles, but may not be limited thereto.

Here, SL carrier aggregation and sidelink resources in an unlicensed band and use of sidelink resources in the unlicensed band may be required in consideration of the aforementioned sidelink requirements. As another example, a data rate increase may be supported by improving an FR2 band sidelink operation. Based on the above, since application to more commercial applications become possible based on a data rate that is increased in sidelink, the use of NR-based sidelink may become possible in a larger market.

For example, a sidelink frequency for a sidelink operation in a new system (e.g., NR) may be present within FR1(410MHz to 7.125 GHz), FR2 (24.25 GHz to 52.6 GHz), and 52.6 GHz to 71 GHz band. For example, the sidelink may be determined in consideration of all of unlicensed bands and licensed bands. Also, an NR sidelink for an NR sidelink operation may be applied as a common design in both FR1 and FR2, but may not be limited thereto. For example, a wireless access scheme for an NR sidelink unlicensed carrier operation is described based on frequency bands corresponding to 5 GHz and 6 GHz unlicensed bands corresponding to FR1 (FR1 unlicensed bands (n46 and n96/n102)), but may not be limited thereto. Also, for example, the sidelink may be configured in consideration of availability of LTE (ng-eNB)/NR(gNB) Uu link that is a 3GPP NG-RAN (particularly, for SL data transmission and reception-related configuration and SL physical resource allocation). In consideration of the above, in the following the base station may include ng-eNB or gNB in NG-RAN, which is referred to as the base station for clarity of description, but may not be limited to a specific form.

In the following, a resource pool configuration method for a new sidelink channel to make an NR sidelink wireless interface operable in an unlicensed band is described. As described above, when the device uses the unlicensed band, a regulation regarding maximum transmit power (Max. transmission power) and maximum PSD (e.g., 10 dBm/MHz) limitations may be present differently for each region.

For example, in an environment in which the aforementioned regulation is present, in the case of performing only small data transmission and narrow band transmission, data transmission coverage may decrease. In consideration of the above, in the case of performing sidelink communication in an unlicensed band, an interlace resource allocation scheme having transmission resources as the entire bandwidth may be considered. The interlace resource allocation scheme having transmission resources as the entire bandwidth may satisfy an occupied channel bandwidth (e.g., occupied channel bandwidth in ETSI EN 301 893 for 5 GHz unlicensed band), which is an unlicensed band-related regulation considering a specific region (e.g., ETSI). Here, as described above, the aforementioned regulation stipulates that, when a single Tx device occupies a channel and performs transmission in an unlicensed band, transmission including 99% of transmit power needs to be supported in a bandwidth corresponding to at least 80% to 100% of the declared nominal channel bandwidth. Therefore, a sidelink unlicensed band (SL-U) that may be operated in the corresponding unlicensed band needs to meet OCB requirements. In the following, a new SL-U resource pool configuration and resource allocation method in consideration of the aforementioned purpose in the NR SL-U band is described.

For example, a new SL-U resource pool configuration described below may be an interlace-based resource pool configuration scheme. Here, the SL-U resource pool configuration may be performed through a scheme described below, but may not be limited thereto. For example, the SL-U resource pool configuration may be a subchannel unit interlace-based resource pool configuration scheme rather than an interlace-based resource pool configuration scheme using RB units and may consider an interlace-based resource pool configuration scheme having any possible unit (e.g., subcarrier/RE, RB, subchannel, RBS) in frequency. Also, a scheme configured based on consecutive frequency resources may be applied. Also, a scheme configured based on consecutive frequency resources may be applied. Also, interlace-based resource pool configuration may be applied in units of some consecutive frequency resources (e.g., interface in units of the number of one or more consecutive REs/RBs). As another example, SL-U resource pool configuration may be applied similar to the existing SL resource pool configuration, while a scheme of scheduling frequency resources may be applied in an interlace manner, which is not limited to a specific embodiment.

Also, for example, a plurality of SL-U resource pool configuration schemes including the following SL-U resource pool configuration scheme may be present for transmission, reception, and other various purposes. A specific SL-U resource pool configuration scheme may be provided to the UE through higher layer signaling. Here, higher layer signaling may include at least one of higher layer signaling from the base station, higher layer signaling from another UE, and higher layer configuration preset inside the UE, and is not limited to specific embodiment. As another example, in the wireless communication system, only the following interlace-based resource pool configuration scheme may also be used, and is not limited to a specific embodiment.

That is, although an interlace-based SL-U resource pool configuration method in sidelink communication is described below, configuration may be performed in various forms without being limited thereto. However, for clarity of description, description is made based on the interlace-based SL-U resource pool configuration.

For example, the sidelink resource pool may be configured in consideration of time resources and frequency resources. Here, as the time resources, at least one of a settable resource pool time period, a sidelink slot set (e.g., sl-TimeResource (length = $L_{bitmap}$)) within a settable single resource pool period, and a first symbol and the number of consecutive symbols for a set of consecutive symbols within a single slot may be configured.

Also, as the frequency resources, at least one of a bandwidth of at least one subchannel (e.g., sl-SubchannelSize = {10, 15, 20, 25, 50, 75 and 100} RBs), a settable resource pool bandwidth (set of consecutive subchannels (e.g., sl-NumSubchannel = {1 to 27})), and a frequency domain location of a first subchannel of the resource pool (e.g., sl-StartRBsubchannel={0 to 265}) may be configured.

For example, in the case of performing sidelink communication in an unlicensed band, resource pool configuration may need to be determined in consideration of the unlicensed band. In more detail, another wireless access system (e.g., NR-U, LTE LAA, WiFi) may be present in the unlicensed band. That is, sidelink communication in the unlicensed band may be performed in consideration of sharing the unlicensed band with the other wireless access system. Here, in the case of performing sidelink communication based on the unlicensed band, the UE may perform communication after occupying a channel based on a channel access procedure (e.g., LBE, FBE). Here, the channel access procedure may be an operation of occupying a corresponding channel during a certain period of time. That is, in the case of performing communication in the unlicensed band, limitations may be present in the time domain based on a channel occupancy period. Considering this, in the case of performing sidelink communication in the unlicensed band, additional configuration in the time domain as the sidelink resource pool may be an unreasonable requirement compared to other wireless access systems. Therefore, there may be no need to configure the sidelink resource pool in the existing time domain in the unlicensed band. Here, time resource allocation for sidelink communication in the unlicensed band may be defined by the channel access procedure in the same manner as other wireless access systems (e.g., NR-U, LTE LAA, WiFi) in the unlicensed band. That is, sidelink communication in the unlicensed band may also consider acquiring unlicensed band resources in the time domain through the same method as the unlicensed band channel access procedure and may not configure a separate resource pool in the time domain, but may not be limited thereto.

For example, in the case of performing sidelink resource pool configuration in the unlicensed band, resource pool configuration in the time domain may be performed based on a channel occupancy procedure. For example, sidelink resources may be finally determined and/or configured through the resource pool configured through at least one of the settable resource pool time period, the sidelink slot set within the settable single resource pool period, and the first symbol and the number of consecutive symbols for the set of consecutive symbols within a single slot and the channel occupancy procedure, but may not be limited to a specific embodiment. In detail, the base station/UE may perform a sidelink operation in the unlicensed band to occupy corresponding resources by performing the channel occupancy procedure before time resources indicated based on information for the resource pool configuration.

However, in the following, the resource pool in the time domain is not considered for clarity of description and description related to the resource pool configuration in the frequency domain is made.

For example, the sidelink resource configuration in the unlicensed band in the frequency domain may need to be performed by considering that sidelink is performed through the unlicensed band. In particular, in a region in which the aforementioned regulation applies, configuration for satisfying conditions based on the regulation may be required, but may not be limited thereto.

The resource pool for sidelink communication in the unlicensed band may be configured based on an interlace method.

In detail, as described above, a regulation for the unlicensed band may be present in a specific region. For example, there may be a regulation on maximum transmit power and maximum PSD (e.g., 10 dBm/MHz) limitations that the device may use. In an environment in which the aforementioned regulation is present, in the case of performing small data transmission and narrow band transmission, coverage may decrease and an interlace resource allocation scheme with transmission resources as the entire bandwidth may be applied. Also, the interlace resource allocation scheme may satisfy the regulation related to the minimum occupied bandwidth described above.

Here, the interlace resource allocation scheme may indicate defining and using specific resource units (e.g., RBs, subchannels, etc.) having a uniform frequency spacing on frequency resources as a set. Therefore, resource units allocated at uniform spacings in a single frequency channel may be indicated through a single index.

For example, a method of allocating each subchannel based on interlace, on the basis of a case in which a plurality of RBs constituting a subchannel is allocated at uniform intervals may be applied, but may not be limited thereto.

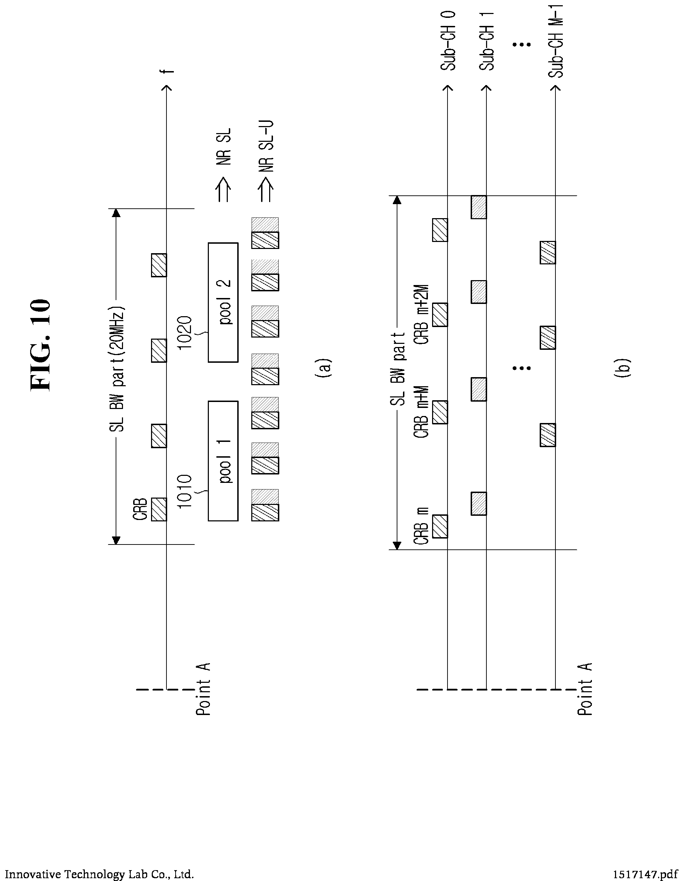

FIG. 10 illustrates a single RBS operation to which the present disclosure may apply.

FIG. 10 may show a case in which a single RBS is configured in a single sidelink bandwidth part (SL-BWP). Here, for sidelink communication that operates in an unlicensed band may be configured through a subchannel index (interlace index) or other frequency resource allocation unit indexes (e.g., unit indicating a plurality of RBs) based on an interlace structure. In detail, at least one resource pool may be configured within a single SL BWP based on an interlace subchannel. Here, interlace-based resources may be configured based on a CRB as a resource block that is allocated based on point A, but may not be limited thereto. Also, in the case of applying the same interlace in different BWPs, using different interlace indexes may make PUSCH/PUCCH resource allocation between other users complicated.

An interlace-based resource pool in a specified single SL BWP in the frequency domain may be configured and indicated through higher layer signaling and/or DCI/SCI-based physical layer signaling.

For example, a parameter for an interlace-based sidelink resource pool configuration status may be set and the parameter may be set to the UE through higher layer signaling. Here, if an interlace-based resource pool configuration is required, the parameter may be set to "enable." On the contrary, if the interlace-based resource pool configuration is not required, the parameter may be set to "disable." Here, a sidelink resource pool may be configured based on the number of consecutive subchannels as before, but may not be limited thereto.

On the contrary, if the interlace-based resource pool configuration is required, an interlace may be configured based on a CRB as a resource block that is set based on point A. Here, in the case of using the same interlace in different BWPs, using different interlace indexes may make PUSCH/PUCCH resource allocation between different users complicated. Considering this, the interlace index may be set based on the CRB.

Also, for example, a parameter for an interlace-based subchannel index associated with the resource pool may be set and may be provided to the UE through a higher layer. Here, assuming a total number of subchannel indexes (i.e., the number of interlace indexes) in the unlicensed channel as M, the subchannel index may be set to 0 to M-1. The interlace structure may be configured based on an LBT bandwidth that is considered in the unlicensed band. Here, the number of RBs for configuring a single RBS in the LBT bandwidth may vary according to an SCS. For example, for 15 kHz SCS, the number of RBs for configuring an RBS may be 100 to 110 RBs. Also, for 30 kHz SCS, the number of RBs for configuring the RBS may be 50 to 55 RBs. For example, the interlace structure may be set based on 10 RBs at 15 kHz SCS in consideration of the number of RBs and may be set based on 5 RBs at 30 kHz SCS. That is, in the case of 15 kHz SCS, a portion of the same interlace may be present for every 10 RBs. However, it is only an example and the number of RBs may change. For example, the interlace structure may be configured with different values depending on an RBS size (LBT bandwidth), an SCS, and the number of RBs constituting a single interlace.

Here, referring to FIG. 10, a bitmap for M-subchannel index indication associated with a resource pool may be configured. For example, if M=10 interlace at 15 kHz SCS, a 10-bit bitmap may be set. As another example, if M=5 interlace at 30 kHz SCS, a 5-bit bitmap may be set. That is, a bitmap for M-subchannel index indication associated with the resource pool may be set. For example, in (a) of FIG. 10, a case in which the existing sidelink resource pool configuration scheme is applied to a resource pool 1 1010 and a resource pool 2 1020 as two resource pools in an SL BWP may be considered. On the other hand, in consideration of resource pool configuration of sidelink communication (SL-U) to meet OCB requirements required in the unlicensed band, a configuration in which the interlace-based resource allocation scheme is set to enable may be provided to each of the resource pools 1010 and 1020. For example, as described above, the number of RBs associated with a single subchannel (interlace) may be differently determined according to an SCS. Referring to (b) of FIG. 10, each of the resource pools 1010 and 1020 may be configured based on M-subchannel indexes that are associated based on a CRB. Therefore, the UE may determine whether a resource pool for sidelink data transmission and reception in the unlicensed band applies the existing sidelink resource pool configuration or the proposed interlace-based resource pool configuration depending on the interlace-based resource pool configuration "enable/disable."

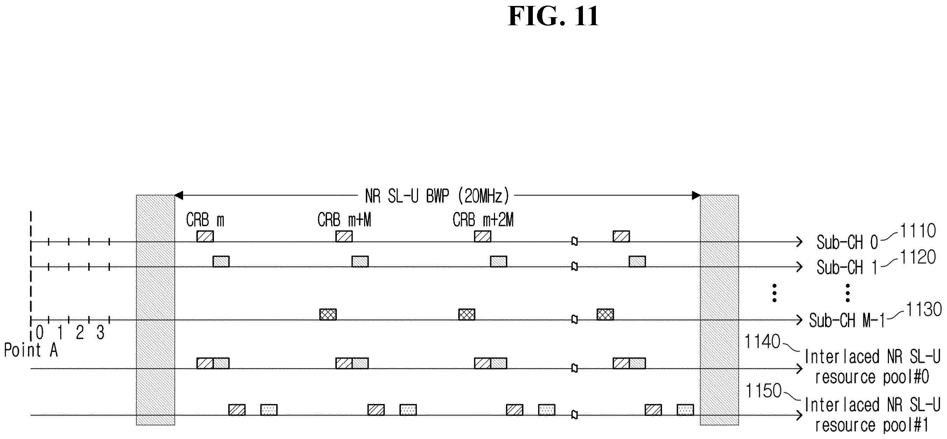

In more detail, FIG. 11 may be a resource pool configuration method for indicating an interlace structure for a resource pool in a single RBS to which the present disclosure may apply. For example, in an unlicensed band SL BWP, a subchannel index may be set to 0 to M-1 based on M RBs associated with each resource pool. For example, subchannel index 0 1110 may indicate CRB m, CRB m+M, CRB m+2M ..., subchannel index 1 1120 may indicate CRB m+1, CRB m+1+M, CRB m+1+2M ..., and subchannel index M-1 1130 may indicate CRB m+M-1, CRB m+2M-1, CRB m+3M-1 .... Here, through an M-bit bitmap, a subchannel index associated with each resource pool may be indicated. For example, as the interlace-based unlicensed band sidelink resource pool, resource pool 0 1140 may include associated subchannel 0 and subchannel 1. Here, as the interlace-based unlicensed band sidelink resource pool, the resource pool 0 1140 may be indicated based on the M-bit bitmap. Also, as the interlace-based unlicensed band sidelink resource pool, resource pool 1 1150 may include associated subchannel 2 and subchannel 4. Here, as the interlace-based unlicensed band sidelink resource pool, the resource pool 1 1150 may be indicated based on the M-bit bitmap. As a higher layer parameter, a parameter for an interlace-based sidelink resource pool configuration status may be set to "enable/disable." Here, if the parameter is "enable," the sidelink resource pool may be configured through an interlace-based subchannel index that constitutes the sidelink resource pool based on the M-bit bitmap.

As another example, an interlace/subchannel for resource pool configuration may be indicated through a resource indication value (RIV). For example, values corresponding to start interlace ($m_0$) and the number of consecutive interlace indexes (L, L>1) may be indicated based on an RIV, which may be as shown in Equation 6 below.

[Equation 6]

$$if\ (L-1) \le \left\lfloor \frac{M}{2} \right\rfloor \quad then\ RIV = M(L-1) + m_0$$

$$else\ RIV\ =\ M(M-L+1) + (M-1-m_0)$$

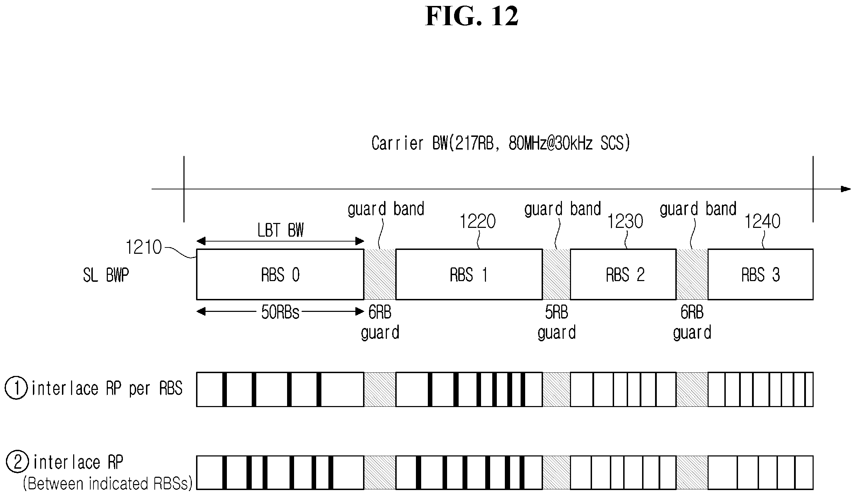

Also, for example, an interlace-based resource pool may be configured in a plurality of RBSs for a wideband operation. FIG. 12 illustrates a method of configuring a resource pool in a plurality of RBSs to which the present disclosure may apply. Referring to FIG. 12, a plurality of RBSs 1210, 1220, 1230, and 1240 may be configured in a single carrier band. Here, a guard band may be present between the respective RBSs 1210, 1220, 1230, and 1240. As described above, the guard band may be configured in the carrier band based on "intracellguardbandsperSCS" parameter or requirements for RF and interference. For example, "intracellguardbandsperSCS" may include "guradBandSCS" indicating an SCS of a guard band, "intraCellGuradBand" indicating a guard band of an intracell, "startCRB" indicating a start CRB of a guard band, and "nrofCRB" indicating the number of CRBs of a guard band, but may not be limited thereto.

[Table 10]

| | |
|---|---|
| IntraCellGuardBandsPerSCS-r16 ::= | SEQUENCE { |
| guardBandSCS-r16 | SubcarrierSpacing, |
| intraCellGuardBands-r16 | SEQUENCE (SIZE (1..4)) OF GuardBand-r16 |
| } | |
| | |
| GuardBand-r16 ::= | SEQUENCE { |
| startCRB-r16 | INTEGER (0..274), |
| nrofCRBs-r16 | INTEGER (0..15) |
| } | |

Here, in the case of indicating a resource pool in a plurality of RBSs for a wideband operation, a resource pool configuration may require an additional configuration in addition to an interlace-based resource pool configuration status and an M-bit bitmap. In detail, the resource pool configuration may be performed in consideration of at least one of an RBS index list associated with the resource pool and the number of RBSs. That is, the resource pool configured in the UE may further consider at least one of the number of RBSs and each RBS index.

For example, a bandwidth for performing LBT in a serving cell having a wideband in an unlicensed band may be considered. Here, the bandwidth for performing the LBT in the unlicensed band may correspond to an RBS, and a plurality of RBSs may be present in a single wideband. Here, in the case of indicating an RBS index based on resource pool configuration, the resource pool configuration may include a bitmap of $N_{RB-set,SL}^{BWP}$ bits for indicating each of $N_{RB-set,SL}^{BWP}$ RBSs associated with the resource pool, and based thereon, may indicate an index of each RBS. For example, as in FIG. 12, if four RBSs corresponding to an LBT bandwidth are set, the resource pool configuration may include a 4-bit bitmap as an RBS index list. For example, RBS#0 1210 and RBS#1 1220 may be indicated as RBSs associated with the resource pool based on the 4-bit bitmap, but it is only an example and is not limited to the aforementioned embodiment. Here, a method of indicating an RBS index may directly indicate not the bitmap but the RBS index.

As another example, the RBS index may be indicated based on a RIV. For example, the RBS index may be indicated with a start RBS ($N_{RB-set,SL}^{start}$) and the number of consecutive interlace indexes ($L_{RB-set,SL}$). Here, $L_{RB-set,SL}$

may be a value greater than 1.

For example, if "IntraCellGuardBandsPerSCS" of Table 10 is set in configuration for a serving cell in an unlicensed carrier (e.g., ServingCellConfigCommon, ServingCellConfig), the UE may verify that one or more RBSs are configured in the unlicensed carrier. For example, in FIG. 12, four RBSs (i.e., four LBT bandwidths) may be configured in 80 MHz (217 RBs) carrier, but it is only an example for clarity of description and is not limited to the aforementioned embodiment. Here, three guard bands may be configured between the respective RBSs 1210, 1220, 1230, and 1240, based on the RRC parameter (e.g., IntraCellGuardBandsPerSCS) shown in Table 10.

For example, a case in which a single SL BWP is configured to correspond to the entire carrier bandwidth and the same RBS and guard band are configured may be considered. Interlace-based resource pool configuration may be applied in each of the RBSs 1210, 1220, 1230, and 1240. Here, the interlace-based resource pool may be configured for each RBS. That is, the interlace-based resource pool may be configured for each RBS regardless of RBS indication. For example, in FIG. 12, "①" may be a case in which the interlace-based resource pool is configured for each RBS. That is, RBS#0 1210 and RBS#1 1220 may be configured as the interlace-based resource pool through the 4bit-bitmap based on four RBSs 1210, 1220, 1230, and 1240. Here, the interlace resource pool may be configured in the same manner for each RBS. That is, in FIG. 12, in each RBS in RBS#0 1210 and RBS#1 1220, the interlace resource pool may be in the same form. As another example, the interlace resource pool may be independently configured for each RBS. That is, in FIG. 12, in each RBS in the RBS#0 1210 and the RBS#1 1220, the interlace resource pool may be in a different form.

As another example, the interlace-based resource pool configuration may be applied between RBSs. As a detailed example, in FIG. 12, "②" may be a case in which the RBS#0 1210 and the RBS#1 1220 are configured as RBSs in which the interlace-based resource pool is indicated. That is, RBs associated with a single subchannel may be RBs present within the RBS#0 1210 and the RBS#1 1220. Based on the above, the UE may receive indication of an RBS index as resource pool configuration for a sidelink unlicensed band through higher layer signaling. For example, in FIG. 12, the UE may receive indication of the RBS index with the resource pool configuration based on the 4-bit bitmap. Here, based on RBS index information, the RBS#0 1210 and the RBS#1 1220 may be indicated. Through this, the UE may configure an interlace-based subchannel configuration method within the RBS#0 1210 and the RBS#1 1220 and resources corresponding to an intersection thereof as a sidelink unlicensed band resource pool.

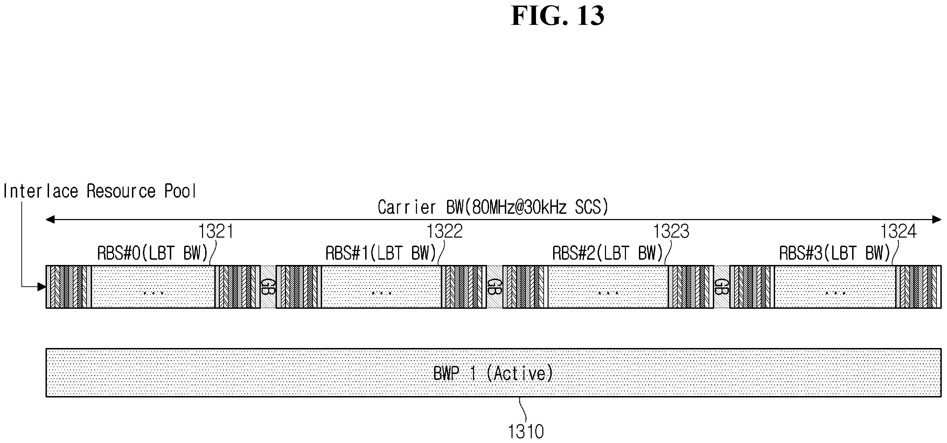

FIG. 13 illustrates a method of indicating an interlace-based resource pool configuration on a plurality of RBSs for a wideband operation to which the present disclosure may apply. Referring to FIG. 13, a single BWP (BWP 1 1310) may be configured and activated in a single carrier band. A plurality of RBSs (RBS#0 to RBS#3, 1321, 1322, 1323, and 1324) may be configured within the activated BWP 1 1310. Here, which RBS among the RBSs 1321, 1322, 1323, and 1324 configured within the SL BWP 1 1310 is to be configured as a resource pool may be provided to the UE based on a signaling parameter. For example, FIG. 13 may be a case in which all of the RBSs 1321, 1322, 1323, and 1324 configured within a single BWP 1310 are configured as a single resource pool, but it is only an example and is not limited to the aforementioned embodiment. Also, the UE may be provided with an associated RBS index-related parameter that is configured as a single resource pool and a parameter for an interlace-based subchannel within each RBS through higher layer signaling. RBSs associated with the resource pool and subchannels within the corresponding RBSs may be configured in the UE based on the aforementioned parameters.

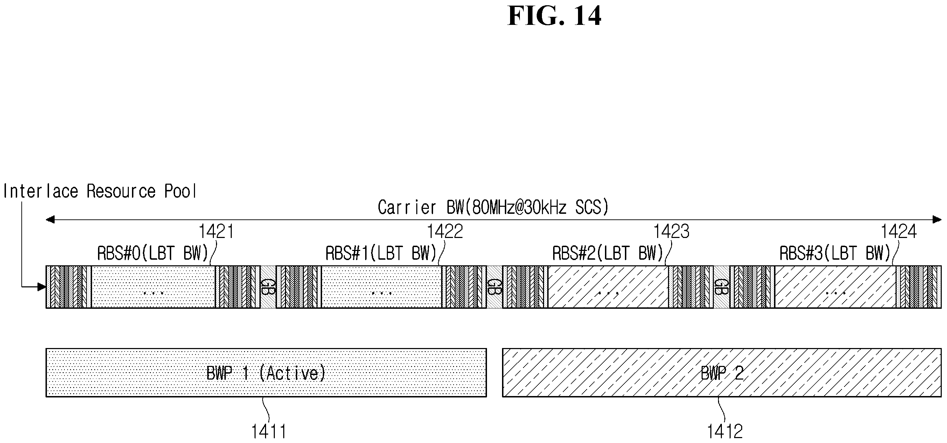

FIG. 14 illustrates a method of indicating an interlace-based resource pool configuration on a plurality of RBSs for a wideband operation to which the present disclosure may apply. Referring to FIG. 14, a plurality of BWPs (BWP 1 1411 and BWP 2 1412) may be configured in a single carrier band. For example, only one of the plurality of BWPs 1411 and 1412 configured in a single carrier band may be activated. For example, FIG. 14 may be a case in which the BWP 1 1411 is activated, but it is only an example and is not limited to the aforementioned embodiment.

Here, the UE may be provided with resource pool configuration information on RBSs (RBS#0 1421 and RBS#1 1422) associated with the activated BWP 1 1411 through higher layer signaling. That is, when the RBSs 1421 and 1422 within the BWP 1 1411 are configured in an unlicensed carrier, which RBS between the corresponding RBSs 1421 and 1422 is associated with the resource pool may be indicated. For example, as described above, the RBS associated with the resource pool may be indicated based on a bitmap or may be indicated based on a RIV. For example, in FIG. 14, all of the RBSs 1421 and 1422 associated with the BWP 1 1411 may be indicated as the resource pool. Ultimately intersecting resources may be set to the UE as the resource pool through an additional indication configuration in the resource pool configuration using an interlace-based subchannel index within each RBS.

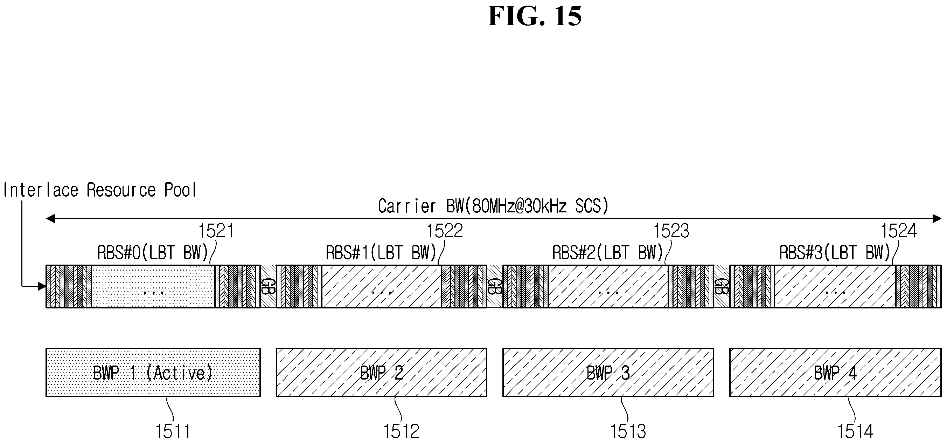

FIG. 15 illustrates a method of indicating an interlace-based resource pool configuration on a plurality of RBSs for a wideband operation to which the present disclosure may apply. Referring to FIG. 15, four SL BWPs 1511, 1512, 1513, and 1514 may be configured in a single carrier BW. Here, only any one of the four SL BWPs may be activated. For example, if only SL BWP 1 1511 is activated, a single RBS (RBS#0) 1521 associated with the SL BWP 1 1511 may be indicated as a resource pool through higher layer signaling. For example, since only one RBS 1521 is present within the SL BWP 1 1511, a parameter for indicating an additional RBS may not be required. Here, through a resource pool configuration based on an interlace-based subchannel index within the RBS#0 1521, ultimately intersecting resources may be configured as the resource pool and provided to the UE accordingly.

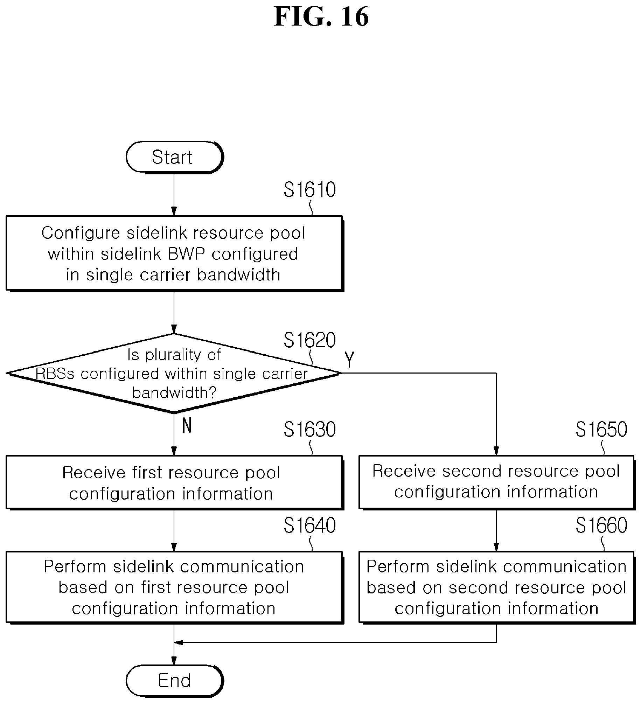

FIG. 16 illustrates a sidelink resource pool configuration method for an unlicensed band to which the present disclosure may apply. Referring to FIG. 16, a UE may receive configuration of a sidelink resource pool within a sidelink BWP configured in a single carrier bandwidth through higher layer signaling (S1610). Here, the sidelink resource pool may be a resource pool configured in consideration of an unlicensed band. For example, the UE may receive first resource pool configuration information or second resource pool configuration information depending on whether a plurality of RBSs is configured within a carrier bandwidth (S1620). Here, when a single RBS is configured and operates within the carrier bandwidth, the UE may receive the first resource pool configuration information (S1630). That is, when a single RBS is configured based on a single sidelink BWP in a single carrier bandwidth, the UE may receive the first resource pool configuration information and, based thereon, may perform the sidelink communication (S1640). Here, the first resource pool configuration information may include at least one of parameter information indicating whether an interlace-based sidelink resource pool is configured and interlace-based subchannel index information associated with a resource pool. For example, information indicating whether the interlace-based sidelink resource pool is configured may be set to "enable" or "disable" to indicate an interlace-based sidelink resource pool configuration status. Also, for example, an interlace-based subchannel index associated with the resource pool may include M subchannel indexes based on an SCS. Here, the M subchannel indexes may be indicated based on an M-bit bitmap or a RIV, which is described above. Here, a resource pool configured in a sidelink unlicensed band may be configured based on an interlace on the basis of a subchannel index (interlace index) or a unit index, which is described above.

Also, for example, when the plurality of RBSs is configured in a single carrier bandwidth, the UE may receive the second resource pool configuration information (S1650). Then, the UE may perform the sidelink communication based on the second resource pool configuration information (S1660). That is, when the plurality of RBSs for wideband operation is configured in the UE, the UE may receive the second resource pool configuration information and may perform the sidelink communication. Here, the second resource pool configuration information may be resource pool configuration information that is configured in consideration of the wideband operation. For example, the second resource pool configuration information may include the aforementioned first resource pool configuration information. That is, the second resource pool configuration information may include at least one of parameter information indicating whether an interlace-based sidelink resource pool is configured and interlace-based subchannel index information associated with the resource pool. For example, information indicating whether the interlace-based sidelink resource pool is configured may be set to "enable" or "disable" to indicate an interlace-based sidelink resource pool configuration status. Also, for example, an interlace-based subchannel index associated with the resource pool may include M subchannel indexes based on an SCS. Here, the M subchannel indexes may be indicated based on an M-bit bitmap or a RIV, which is described above. Also, the second resource pool configuration information may further include at least one of an RBS index list associated with the resource pool and RBS number information. For example, the RBS index list may be indicated based on a bitmap or a RIV including bits corresponding to the number of RBSs configured in the carrier bandwidth, which is described above. Here, for example, the interlace-based resource pool may be configured for each RBS based on the second resource pool configuration information. For example, when the interlace-based resource pool is configured for each RBS, the same interface (subchannel index) or RB unit index-based resource pool may be configured for each RBS. As another example, when the interlace-based resource pool is configured for each RBS, a different interface (subchannel index) or RB unit index-based resource pool may be configured for each RBS, which is not limited to a specific embodiment.

As another example, an interlace (subchannel index) or an RB unit index-based resource pool may be configured between RBSs (i.e., per one or more RBSs). That is, the interlace-based resource pool may be configured in the plurality of RBSs and may be indicated based on a subchannel index. Based on the above, the UE may receive configuration of an RBS associated with a resource pool and subchannels within the associated RBS from the base station.

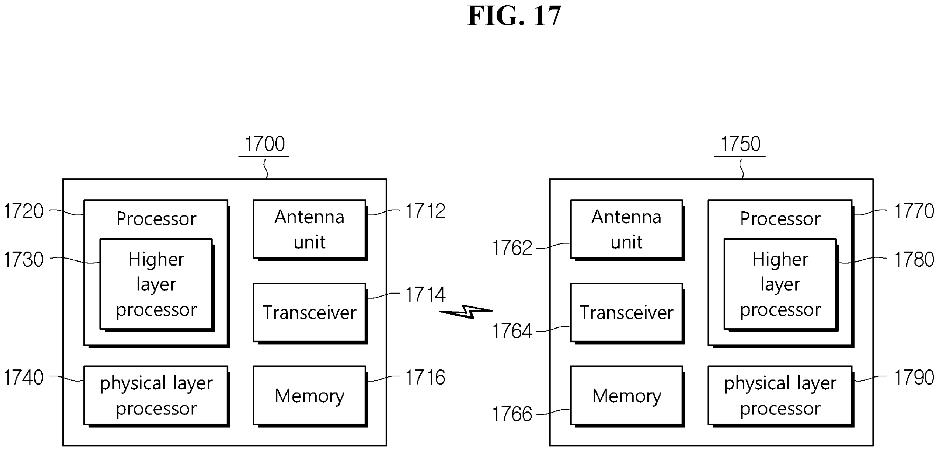

FIG. 17 is a diagram illustrating a base station apparatus and a UE apparatus to which the present disclosure may be applied.

The base station device 1700 may include a processor 1720, an antenna unit 1712, a transceiver 1714, and a memory 1716.

The processor 1720 performs a baseband-related signal processing and may include a higher layer processor 1730 and a physical layer processor 1740. The higher layer processor 1730 may process the operation of a medium access control (MAC) layer, a radio resource control (RRC) layer, or a higher layer thereof. The physical layer processor 1740 may process the operation of the physical (PHY) layer (e.g., uplink receive signal processing, downlink transmission signal processing). Also, to perform baseband-related signal processing, the processor 1720 may also control the operation of the base station device 1700 as a whole.

The antenna unit 1712 may include one or more physical antennas, and may support the multiple input multiple output (MIMO) transmission and reception in the case of including a plurality of antennas. Also, beamforming can be supported.

The memory 1716 may store computationally processed information of the processor 1720, software, operating systems, applications, and the like related to the operation of the base station device 1700, and may include components such as buffers.

The processor 1720 of the base station 1700 may be configured to implement the operation of the base station in the example described herein.

The UE device 1750 may include a processor 1770, an antenna unit 1762, a transceiver 1764, and a memory 1766. For example, herein, the UE device 1750 may perform communication with the base station device 1700. As another example, herein, the UE device 1750 may perform SL communication with another UE device. That is, the UE device 1750 used herein refers to a device capable of communicating with at least one of the base station device 1700 and the other UE devices and is not limited to communication with a specific device.

The processor 1770 performs baseband-related signal processing and may include a higher layer processor 1780 and a physical layer processor 1790. The higher layer processor 1780 may process the operation of the MAC layer, the RRC layer, or the higher layer. The physical layer processor 1790 may process the operations of the PHY layer (e.g., downlink receive signal processing, uplink transmission signal processing). Also, to perform baseband-related signal processing, the processor 1770 may also control the operation of the UE device 1750 as a whole.

The antenna unit 1762 may include one or more physical antennas, and may support MIMO transmission and reception in the case of including a plurality of antennas. Also, beamforming can be supported.

The memory 1766 may store computationally processed information of the processor 1770, software, operating systems, applications, and the like related to the operation of the UE device 1750, and may include components such as buffers.

The terminal device 1750 according to an example of the present disclosure may be associated with a vehicle. For example, the terminal device 1750 may be integrated in the vehicle, may be located in the vehicle, or may be located on the vehicle. Also, the terminal device 1750 according to the present disclosure may be the vehicle itself. Also, the terminal device 1750 according to the present disclosure may be at least one of a wearable terminal, AR/VR, an Internet of things (IoT) terminal, a robot terminal, and a public safety terminal. The terminal device 1750 to which the present disclosure may apply may include various types of communication devices that support an interactive service using sidelink, for services, for example, Internet access, service execution, navigation, real-time information, autonomous driving, and safety-and-risk diagnosis. Also, the terminal device 1750 may include an AR/VR device capable of performing a sidelink operation or any type of communication devices capable of performing a relay operation as a sensor.

Here, the vehicle to which the present disclosure applies may include an autonomous vehicle, a semi-autonomous vehicle, and a non-autonomous vehicle. Meanwhile, although the terminal device 1750 according to an example of the present disclosure is described in association with the vehicle, at least one of the UEs may not be associated with the vehicle. It is provided as an example only and should not be interpreted to limit application of the present disclosure.

Also, the terminal device 1750 according to an example of the present disclosure may include various types of communication devices capable of performing cooperation that supports an interactive service using sidelink. That is, the terminal device 1750 may directly support the interactive service using the sidelink and may be employed as a cooperation device for supporting the interactive service using the sidelink.

Also, for example, when the terminal device 1750 according to an example of the present disclosure performs sidelink communication, the terminal device 1750 may receive configuration of a sidelink resource pool within a sidelink BWP configured in a single carrier bandwidth through higher layer signaling. Here, the sidelink resource pool may be a resource pool configured in consideration of an unlicensed band. For example, the terminal device 1750 may receive first resource pool configuration information or second resource pool configuration information depending on whether a plurality of RBSs is configured within a carrier bandwidth. Here, when a single RBS is configured and operates within the carrier bandwidth, the terminal device 1750 may receive the first resource pool configuration information. That is, when a single RBS is configured based on a single sidelink BWP in a single carrier bandwidth, the terminal device 1750 may receive the first resource pool configuration information and, based thereon, may perform the sidelink communication. Here, the first resource pool configuration information may include at least one of parameter information indicating whether an interlace-based sidelink resource pool is configured and interlace-based subchannel index information associated with a resource pool. For example, information indicating whether the interlace-based sidelink resource pool is configured may be set to "enable" or "disable" to indicate an interlace-based sidelink resource pool configuration status. Also, for example, an interlace-based subchannel index associated with the resource pool may include M subchannel indexes based on an SCS. Here, the M subchannel indexes may be indicated based on an M-bit bitmap or a RIV, which is described above. Here, a resource pool configured in a sidelink unlicensed band may be configured based on an interlace on the basis of a subchannel index (interlace index) or a unit index, which is described above.

Also, for example, when the plurality of RBSs is configured in a single carrier bandwidth, the terminal device 1750 may receive the second resource pool configuration information. Then, the terminal device 1750 may perform the sidelink communication based on the second resource pool configuration information. That is, when the plurality of RBSs for wideband operation is configured in the UE, the terminal device 1750 may receive the second resource pool configuration information and may perform the sidelink communication. Here, the second resource pool configuration information may be resource pool configuration information that is configured in consideration of the wideband operation. For example, the second resource pool configuration information may include the aforementioned first resource pool configuration information. That is, the second resource pool configuration information may include at least one of parameter information indicating whether an interlace-based sidelink resource pool is configured and interlace-based subchannel index information associated with the resource pool. For example, information indicating whether the interlace-based sidelink resource pool is configured may be set to "enable" or "disable" to indicate an interlace-based sidelink resource pool configuration status. Also, for example, an interlace-based subchannel index associated with the resource pool may include M subchannel indexes based on an SCS. Here, the M subchannel indexes may be indicated based on an M-bit bitmap or a RIV, which is described above. Also, the second resource pool configuration information may further include at least one of an RBS index list associated with the resource pool and RBS number information. For example, the RBS index list may be indicated based on a bitmap or a RIV including bits corresponding to the number of RBSs configured in the carrier bandwidth, which is described above. Here, the interlace-based resource pool may be configured for each RBS based on the second resource pool configuration information. For example, when the interlace-based resource pool is configured for each RBS, the same interface (subchannel index) or RB unit index-based resource pool may be configured for each RBS. As another example, when the interlace-based resource pool is configured for each RBS, a different interface (subchannel index) or RB unit index-based resource pool may be configured for each RBS, which is not limited to a specific embodiment.

As another example, an interlace (subchannel index) or an RB unit index-based resource pool may be configured between RBSs (i.e., per one or more RBSs). That is, the interlace-based resource pool may be configured in the plurality of RBSs and may be indicated based on a subchannel index. Based on the above, the terminal device 1750 may receive configuration of an RBS associated with a resource pool and subchannels within the associated RBS from the base station.

Also, various examples of the present disclosure may be implemented by hardware, firmware, software, or combination thereof. In the case of implementation by hardware, the examples may be implemented by one or more application-specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine-executable instructions (e.g., OS, application, firmware, program, etc.) such that the operations of the method of the various examples may be executed on an apparatus or a computer, and a non-transitory computer-readable medium storing such software or instructions to be executable on an apparatus or a computer.

Various examples of the present disclosure are to explain the representative aspects of the present disclosure rather than listing all the possible combinations and matters described in the various examples may be applied alone or in combination of at least two of the examples.

INDUSTRIAL APPLICABILITY

The above may be applied to various systems.

**Claims**

1. A method of configuring a sidelink resource pool to a user equipment (UE) in a wireless communication system, the method comprising:

   receiving, by the UE, resource pool configuration information from a base station based on higher layer signaling; and
   performing sidelink communication with another UE based on the resource pool configuration information,

   wherein the resource pool configuration information is information that is based on sidelink resource pool configuration of an unlicensed band.

2. The method of claim 1, wherein, when the UE performs the sidelink communication in a single resource block set (RBS) based on a single sidelink bandwidth part (SL BWP) in a single carrier bandwidth, the UE performs the sidelink communication based on first resource pool configuration information.

3. The method of claim 2, wherein the first resource pool configuration information includes at least one of information on an interlace-based sidelink resource pool configuration status and interlace-based subchannel index information associated with a resource pool.

4. The method of claim 1, wherein, when the UE performs the sidelink communication in a plurality of RBSs based on a single SL BWP in a single carrier bandwidth, the UE performs the sidelink communication based on second resource pool configuration information.

5. The method of claim 4, wherein the second resource pool configuration information includes at least one of information on an interlace-based sidelink resource pool configuration status and interlace-based subchannel index information associated with a resource pool.

6. The method of claim 5, wherein the second resource pool configuration information further includes at least one of RBS index list information associated with the resource pool and RBS number information.

# FIG. 1

| Downlink frame *i* |
|:---:|

| Uplink frame *i* |
|:---:|

$N_{TA} T_s$

# FIG. 2

One sub frame

$N_{\text{sub frame}}^{\text{symbols}\,\mu}$ OFDM symbols

$k = N_{RB}^{\mu}\,N_{sc}^{RB}\,\text{-}1$

$N_{RB}^{\mu}\,N_{sc}^{RB}$ subcarriers

$N_{sc}^{RB}$ subcarriers

Resource block

Resource element
-$(k,\bar{l})$ in resource grid
-$(k,l)$ in resource block

$k = 0$

$l = 0$

$\bar{l} = 14 \cdot 2^{\mu} \text{-}1$

# FIG. 3

# FIG. 4

| V2V | Reserved | Reserved | Tolling | Control | I2V | PVD/ Security |
|------|----------|----------|---------|---------|------|---------------|
| CH 1 | CH 2 | CH 3 | CH 4 | CH 5 | CH 6 | CH 7 |

C-V2X

5,855    5,865    5,875    5,885    5,895    5,905    5,915    5,925 MHz

# FIG. 5

sl-TimeResource(length = $L_{bitmap}$)
(e.g.,0011111100)

SL BWP
Excluded RB
Reserved slot
Excluded slot
SSB slot

sl-RB-Number

Frequency(RBs)

sl-StartRBsubchannel

sl-SubchannelSize

Time(slots)

$10240 \times 2^{\mu}$

# FIG. 6

**FIG. 7**

| U-NII-1 (100 MHz) | U-NII-2A (100 MHz) | U-NII-2B (120 MHz) | U-NII-2C (255 MHz) | U-NII-3 (100 MHz) Part 15.247 Rules (125 MHz) | 25 MHz | U-NII-4 (75 MHz) |

5.150 GHz    5.250 GHz    5.350 GHz        5.470 GHz                              5.725 GHz        5.850 GHz    5.925 GHz

# FIG. 8

# FIG. 9

$$RB_{s1,uplink}^{end,\mu}$$

911

Carrier bandwidth — LBT bandwidth(RB set1,s1)

$$RB_{s,x}^{start,\mu} = N_{grid,x}^{start,\mu} + \begin{cases} 0 & s = 0 \\ GB_{s-1,x}^{start,\mu} + GB_{s-1,x}^{size,\mu} & otherwise \end{cases}$$

$$RB_{s,x}^{end,\mu} = N_{grid,x}^{start,\mu} + \begin{cases} N_{grid,x}^{size,\mu} & s = N_{RB-set,x}-1 \\ GB_{s,x}^{start,\mu} & otherwise \end{cases}$$

923

BWP 3

922

BWP 2

913
nrofCRB(0..15)
startCRB(0..274), $GB_{s0,x}^{start,\mu}$ — Guardband

$$RB_{s1,uplink}^{start,\mu}$$
$$RB_{s0,uplink}^{end,\mu}$$

LBT bandwidth(RB set0,s0)

$$N_{BWP,i}^{size,\mu} = RB_{s1,uplink}^{end,\mu} - RB_{s0,uplink}^{start,\mu}$$

$$N_{BWP,i}^{start,\mu} = RB_{s0,uplink}^{start,\mu}$$

BWP 1

$$RB_{s0,uplink}^{start,\mu}$$

912

921

**FIG. 10**

(a)

(b)

Innovative Technology Lab Co., Ltd.

# FIG. 11

# FIG. 12

Carrier BW(217RB, 80MHz@30kHz SCS)

SL BWP

1210

LBT BW

guard band    1220    guard band    1230    guard band    1240

RBS 0    RBS 1    RBS 2    RBS 3

50RBs    6RB guard    5RB guard    6RB guard

① interlace RP per RBS

② interlace RP
(Between indicated RBSs)

EP 4 514 006 A1

# FIG. 13

EP 4 514 006 A1

Interlace Resource Pool

Carrier BW(80MHz@30kHz SCS)

| 1321 | 1322 | 1323 | 1324 |

RBS#0(LBT BW)    RBS#1(LBT BW)    RBS#2(LBT BW)    RBS#3(LBT BW)

... GB ... GB ... GB ...

BWP 1 (Active)

1310

**FIG. 14**

Interlace Resource Pool

Carrier BW(80MHz@30kHz SCS)

1421  1422  1423  1424

RBS#0(LBT BW)  RBS#1(LBT BW)  RBS#2(LBT BW)  RBS#3(LBT BW)

GB  GB  GB

BWP 1 (Active)

BWP 2

1411

1412

EP 4 514 006 A1

**FIG. 15**

EP 4 514 006 A1

Interlace Resource Pool

Carrier BW(80MHz@30kHz SCS)

1521 1522 1523 1524

RBS#0(LBT BW) RBS#1(LBT BW) RBS#2(LBT BW) RBS#3(LBT BW)

GB GB GB

BWP 1 (Active)    BWP 2    BWP 3    BWP 4

1511     1512     1513     1514

# FIG. 16

Start

S1610

Configure sidelink resource pool
within sidelink BWP configured
in single carrier bandwidth

S1620

Is plurality of
RBSs configured within single carrier
bandwidth?

Y

N

S1630

Receive first resource pool
configuration information

S1650

Receive second resource pool
configuration information

S1640

Perform sidelink communication
based on first resource pool
configuration information

S1660

Perform sidelink communication
based on second resource pool
configuration information

End

# FIG. 17

| 1720 — Processor | 1712 — Antenna unit |
| 1730 — Higher layer processor | 1714 — Transceiver |
| 1740 — physical layer processor | 1716 — Memory |

1700

| 1762 — Antenna unit | 1770 — Processor |
| 1764 — Transceiver | 1780 — Higher layer processor |
| 1766 — Memory | 1790 — physical layer processor |

1750

# EP 4 514 006 A1

<table>
<tr><td colspan="2" align="center"><strong>INTERNATIONAL SEARCH REPORT</strong></td><td colspan="2">International application No.<br><br><strong>PCT/KR2023/005310</strong></td></tr>
</table>

**A. CLASSIFICATION OF SUBJECT MATTER**

**H04W 72/04**(2009.01)i; **H04W 72/20**(2023.01)i; **H04W 72/53**(2023.01)i; **H04W 4/40**(2018.01)i; **H04W 92/18**(2009.01)i

According to International Patent Classification (IPC) or to both national classification and IPC

**B. FIELDS SEARCHED**

Minimum documentation searched (classification system followed by classification symbols)

H04W 72/04(2009.01); H04W 24/02(2009.01); H04W 72/02(2009.01); H04W 76/27(2018.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드 링크(sidelink), 자원 풀 설정 정보(resource pool configuration information), 비면허 대역(unlicensed band), 사이드링크 대역폭(sidelink bandwidth part, SL BWP), RBS(resource block set), 인터레이스(interlace), 서브 채널 인덱스(subchannel index)

**C. DOCUMENTS CONSIDERED TO BE RELEVANT**

| Category* | Citation of document, with indication, where appropriate, of the relevant passages | Relevant to claim No. |
|---|---|---|
| Y<br><br>A | CASTANEDA GARCIA, Mario H. et al. A Tutorial on 5G NR V2X Communications. in: IEEE Communications Surveys & Tutorials. 03 February 2021, Vol. 23, Issue 3, pp. 1972-2026, eISSN: 1553-877X.<br>        See pages 1982-2020; and figures 25-27 and 35. | 1<br><br>2-6 |
| Y | ERICSSON. On coexistence of NR SL and LTE SL for V2X. R1-1811602, 3GPP TSG-RAN WG1 Meeting #94bis. Chengdu, China. 28 September 2018.<br>        See pages 2-3. | 1 |
| A | KR 10-2020-0050821 A (INNOVATIVE TECHNOLOGY LAB CO., LTD.) 12 May 2020 (2020-05-12)<br>        See paragraphs [0162]-[0220]; and figures 11-14. | 1-6 |
| A | US 2022-0060913 A1 (GUANGDONG OPPO MOBILE TELECOMMUNICATIONS CORP., LTD.) 24 February 2022 (2022-02-24)<br>        See abstract; paragraphs [0039]-[0083]; and figures 2-4e. | 1-6 |

☑ Further documents are listed in the continuation of Box C.     ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br><br>     **26 July 2023** | Date of mailing of the international search report<br><br>     **27 July 2023** |
| Name and mailing address of the ISA/KR<br><br>**Korean Intellectual Property Office**<br>**Government Complex-Daejeon Building 4, 189 Cheongsa-ro, Seo-gu, Daejeon 35208**<br><br>Facsimile No. **+82-42-481-8578** | Authorized officer<br><br><br><br><br>Telephone No. |

Form PCT/ISA/210 (second sheet) (July 2022)

| INTERNATIONAL SEARCH REPORT | International application No. |
|---|---|
| | **PCT/KR2023/005310** |

**C.    DOCUMENTS CONSIDERED TO BE RELEVANT**

| Category* | Citation of document, with indication, where appropriate, of the relevant passages | Relevant to claim No. |
|---|---|---|
| A | US 2020-0236656 A1 (CAO, Yu et al.) 23 July 2020 (2020-07-23)<br>See paragraphs [0307]-[0310]; claims 1-2; and figure 6. | 1-6 |

Form PCT/ISA/210 (second sheet) (July 2022)

INTERNATIONAL SEARCH REPORT
Information on patent family members

International application No.

**PCT/KR2023/005310**

| Patent document cited in search report | | | Publication date (day/month/year) | Patent family member(s) | | | Publication date (day/month/year) |
|---|---|---|---|---|---|---|---|
| KR | 10-2020-0050821 | A | 12 May 2020 | WO | 2020-091493 | A1 | 07 May 2020 |
| US | 2022-0060913 | A1 | 24 February 2022 | CN | 113826427 | A | 21 December 2021 |
| | | | | WO | 2020-227869 | A1 | 19 November 2020 |
| US | 2020-0236656 | A1 | 23 July 2020 | CN | 113316967 | A | 27 August 2021 |
| | | | | EP | 3912417 | A1 | 24 November 2021 |
| | | | | US | 11277819 | B2 | 15 March 2022 |
| | | | | WO | 2020-151695 | A1 | 30 July 2020 |

Form PCT/ISA/210 (patent family annex) (July 2022)